# FASCICULE DE BREVET EUROPEEN

(11) **EP 1 817 190 B1**
(45) Date de publication et mention de la délivrance du brevet: **06.04.2011**
(21) Numéro de dépôt: 05807407.1
(22) Date de dépôt: 23.09.2005
(51) Int. Cl.: B60H 1/32, B60H 1/00

(54) **REFROIDISSEUR DE GAZ POUR UN CIRCUIT DE CLIMATISATION DE VÉHICULE AUTOMOBILE**
GASKÜHLER FÜR EINE FAHRZEUGKLIMAANLAGE
GAS COOLER FOR A MOTOR VEHICLE AIR-CONDITIONING SYSTEM

(30) Priorité: 24.09.2004 FR 0410132
(43) Date de publication de la demande: 15.08.2007
(73) Titulaire: VALEO SYSTEMES THERMIQUES, 78321 Le Mesnil St Denis Cedex (FR)
(72) Inventeur: AP, Ngy-Sun, F-78470 ST REMY LES CHEVREUSE (FR); GUERRERO, Pascal, F-92500 Rueil-Malmaison (FR); JOUANNY, Philippe, F-78280 Guyancourt (FR)
(74) Mandataire: Rolland, Jean-Christophe
(86) Numéro de dépôt international: PCT/FR2005/002367
(87) Numéro de publication internationale: WO 2006/035148

(56) Documents cités:
- FR-A- 2 827 224
- US-A- 5 309 731
- US-A1- 2002 184 908
- US-A1- 2004 055 320

## Description

L'invention se rapporte au domaine des circuits de climatisation pour véhicules automobiles.

Elle concerne plus particulièrement un dispositif d'échange de chaleur pour un circuit de climatisation de véhicule automobile, parcouru par un fluide réfrigérant fonctionnant à l'état supercritique, le véhicule comportant un moteur refroidi par un liquide de refroidissement circulant dans une boucle de refroidissement.

Dans un circuit de climatisation classique, le fluide réfrigérant, généralement un composé fluoré, est présent sous deux phases différentes, à savoir une phase gazeuse et une phase liquide.

Ces circuits classiques ont pour principal inconvénient d'utiliser des fluides réfrigérants qui, en cas de fuite, dégagent dans l'atmosphère des composés néfastes pour l'environnement.

Pour éviter l'utilisation de fluides nocifs, on a proposé de remplacer ces fluides réfrigérants fluorés par des fluides moins nocifs, en particulier par des composés naturels, tels que par exemple le dioxyde de carbone.

Ces circuits de climatisation utilisent un fluide fonctionnant à l'état supercritique, et restant la plupart du temps à l'état gazeux.

Un circuit de ce type comprend essentiellement un compresseur, un refroidisseur de gaz (encore appelé "gas cooler", terme anglo-saxon), un échangeur de chaleur interne, un détendeur, un évaporateur et un accumulateur.

Dans un tel circuit, le refroidisseur de gaz remplace le condenseur des circuits de climatisation classiques.

Dans un tel refroidisseur de gaz, la pression du fluide réfrigérant peut atteindre des valeurs de l'ordre de 450 bar, qui sont supérieures aux pressions de l'ordre de 100 bar obtenues dans les circuits de climatisation classiques.

Dans les circuits de climatisation de ce type, envisagés jusqu'à présent, le refroidisseur de gaz est agencé pour refroidir le fluide réfrigérant gazeux par échange thermique avec l'air ambiant. Il s'agit donc d'un échangeur de chaleur du type gaz/air. On connaît par exemple de US2004/0055320 un tel circuit.

Dans les circuits de climatisation de ce type, tels qu'envisagés jusqu'à présent, le fluide réfrigérant subit de grandes variations de pression (130 bar à 40 bar), liées au diagramme de phase de ce fluide.

Par ailleurs, le refroidisseur de gaz se trouve placé en face avant du véhicule, pour pouvoir être traversé facilement par l'air ambiant, et il subit en outre de très fortes pressions.

Comme le refroidisseur de gaz est placé en face avant, il se trouve exposé à des chocs éventuels, qui peuvent s'avérer potentiellement dangereux, compte-tenu du gaz à haute pression présent dans le refroidisseur de gaz.

En outre, le fait de placer ce refroidisseur de gaz en face avant oblige à concevoir des canalisations de longueur importante.

L'invention a notamment pour but de surmonter les inconvénients précités.

Elle propose à cet effet un dispositif d'échange de chaleur du type défini en introduction, lequel comprend au moins deux échangeurs de chaleur, à savoir un premier échangeur fonctionnant à haute température et un deuxième échangeur fonctionnant à basse température, tous deux parcourus par le liquide de refroidissement du moteur du véhicule, et formant deux étages de refroidissement, en sorte que le fluide réfrigérant gazeux est successivement refroidi par le premier échangeur et par le deuxième échangeur, le deuxième échangeur faisant partie d'une boucle de refroidissement à basse température qui est indépendante de la boucle de refroidissement du moteur, et qui comporte sa propre pompe de circulation ainsi qu'un radiateur de refroidissement à basse température.

Ainsi, la fonction de refroidissement est accomplie non pas par échange thermique avec l'air ambiant, mais avec le liquide de refroidissement du moteur avec au moins deux étages successifs.

Le refroidissement s'effectue ainsi essentiellement par le liquide de refroidissement du moteur.

De ce fait, le refroidisseur de gaz n'est plus placé en face avant du véhicule, et se trouve donc à l'abri de chocs de face avant.

De plus, le seul fluide à être en face avant est le fluide de refroidissement du moteur, ce qui entraîne une simplification de la face avant en supprimant les empilements d'échangeurs de chaleur véhiculant différents fluides.

Enfin, la boucle de circulation du fluide réfrigérant se trouve raccourcie, ce qui diminue la longueur des canalisations et diminue également les risques de fuite du fluide réfrigérant. Ceci est d'autant plus important que les fluides réfrigérants du type dioxyde de carbone se trouvent au repos à une pression de l'ordre de 30 bar dans le circuit.

D'autres caractéristiques complémentaires ou alternatives de l'invention sont les suivantes :
- le premier échangeur fait partie de la boucle de refroidissement du moteur, qui constitue une boucle à haute température, et qui inclut le radiateur de refroidissement du moteur.
- Le dispositif d'échange de chaleur comprend au moins un troisième échangeur fonctionnant à très basse température, formant un troisième étage de refroidissement, en sorte que le fluide réfrigérant gazeux est successivement refroidi par le premier échangeur, par le deuxième échangeur et par le troisième échangeur.
- Le troisième échangeur fait partie d'une boucle de refroidissement à très basse température, qui est indépendante de la boucle de refroidissement du moteur, mais qui est aussi parcourue par le liquide de refroidissement du moteur, et qui comporte un radiateur de refroidissement à très basse température.
- La boucle de refroidissement à basse température et la boucle de refroidissement à très basse température constituent deux boucles indépendantes comportant chacune leur propre pompe de circulation, le radiateur de refroidissement à basse température et le radiateur de refroidissement à très basse température étant indépendants.
- La boucle de refroidissement à basse température et la
boucle de refroidissement à très basse température constituent une seule boucle, comportant une seule pompe de circulation, le radiateur de refroidissement à basse température alimentant le radiateur de refroidissement à très basse température.
- Le radiateur de refroidissement à basse température, le radiateur de refroidissement à très basse température et le radiateur de refroidissement à haute température, servant au refroidissement du moteur, constituent un seul composant.
- Le radiateur de refroidissement à basse température et le radiateur de refroidissement à très basse température constituent un seul composant, tandis que le radiateur à haute température servant au refroidissement du moteur est séparé de ce composant.
- Le débit du liquide de refroidissement entrant dans le troisième échangeur est inférieur au débit du liquide de refroidissement entrant dans le deuxième échangeur.
- Le troisième échangeur est traversé par de l'air ambiant.
- Le premier échangeur, le deuxième échangeur et le troisième échangeur forment un seul composant.
- Le fluide réfrigérant est du dioxyde de carbone.
- Le liquide de refroidissement du moteur est de l'eau additionnée d'un antigel.

Dans la description qui suit, donnée seulement à titre d'exemple, on se réfère aux dessins annexés, sur lesquels :
- la figure 1 est un schéma représentant un circuit de climatisation de véhicule automobile, parcouru par un fluide réfrigérant fonctionnant à l'état supercritique, et comportant un refroidisseur de gaz à plusieurs étages selon l'invention ;
- la figure 2 représente schématiquement les trois étages d'un refroidisseur de gaz selon une première forme de réalisation de l'invention ;
- la figure 3 représente schématiquement les trois étages d'un refroidisseur de gaz selon une deuxième forme de réalisation de l'invention ;
- la figure 4 montre un refroidisseur de gaz à trois étages dans une forme de réalisation de l'invention ;
- la figure 5 montre un autre refroidisseur de gaz à trois étages selon une autre forme de réalisation de l'invention ;
- la figure 6 est un schéma analogue à la figure 2 faisant apparaître des valeurs de température, données seulement à titre d'exemples ; et
- la figure 7 est un graphique représentant un diagramme d'état de la fonction de refroidissement.

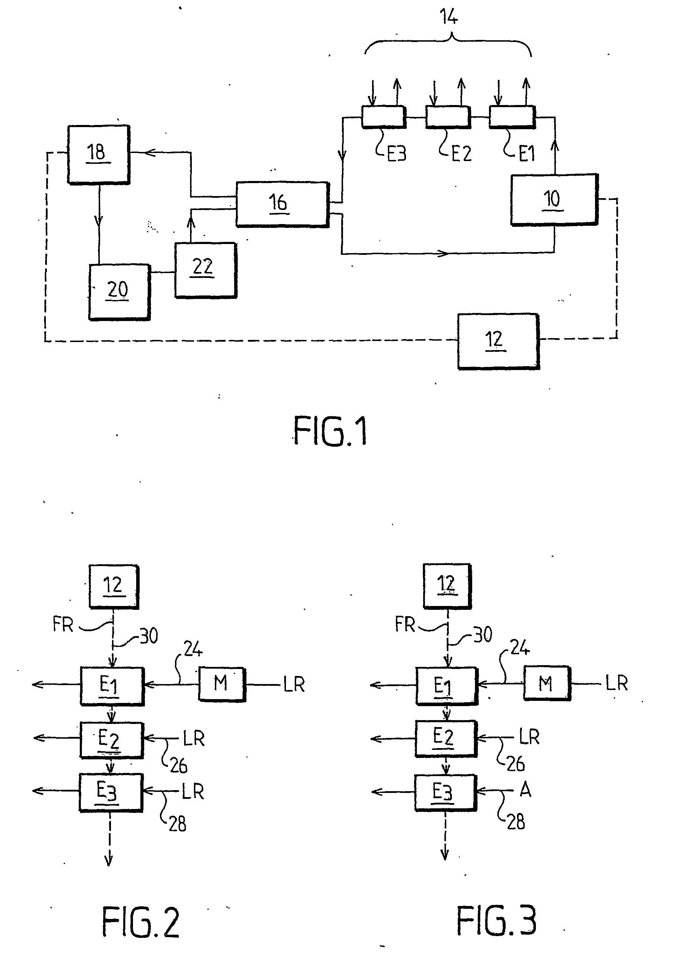

On se réfère d'abord à la figure 1 qui montre un circuit de climatisation de véhicule automobile, parcouru par un fluide réfrigérant fonctionnnant à l'état supercritique, comme par exemple du dioxyde de carbone (C0₂).

Dans un tel circuit, le fluide réfrigérant reste la plupart du temps à l'état gazeux lorsqu'il est refroidi par le refroidisseur de gaz, contrairement aux circuits de climatisation classiques où le fluide réfrigérant se condense.

Le circuit comprend pour l'essentiel un compresseur 10 qui, dans l'exemple, est un compresseur à contrôle externe piloté par une électronique de commande 12. Le fluide réfrigérant envoyé par le compresseur 10 traverse ensuite un refroidisseur de gaz 14 qui, dans l'exemple, est constitué de trois échangeurs E1, E2 et E3 formant ici trois étages de refroidissement successifs, le fluide réfrigérant gazeux traversant successivement le premier échangeur E1, puis le deuxième échangeur E2 et enfin le troisième échangeur E3. Ces échangeurs et leur fonctionnement seront décrits en détail plus loin.

A la sortie du refroidisseur de gaz 14, le fluide traverse un échangeur interne 16, puis est détendu dans un détendeur 18 qui, dans l'exemple, est une vanne de détente pilotée également par l'électronique de commande 12. Le fluide ainsi détendu est ensuite acheminé vers un évaporateur 20 puis vers un accumulateur 22 avant de rejoindre l'échangeur interne 16. Dans cet échangeur de chaleur, le fluide réfrigérant à basse pression provenant de l'accumulateur échange de la chaleur avec le fluide à haute pression provenant du refroidisseur de gaz. A la sortie de l'échangeur interne 16, le fluide gagne à nouveau le compresseur 10, et ainsi de suite.

On se réfère maintenant à la figure 2 pour décrire un premier exemple de réalisation d'un refroidisseur de gaz à trois échangeurs E1, E2 et E3.

Ces trois échangeurs fonctionnent respectivement à haute température (HT), à basse température (BT) et à très basse température (TBT). Dans cet exemple de réalisation, les trois échangeurs sont tous parcourus par le liquide de refroidissement LR du moteur M du véhicule.

Le premier échangeur E1 fait partie d'une boucle 24 de refroidissement du moteur M, dite boucle à haute température (HT). Le deuxième échangeur E₂ fait partie d'une boucle de refroidissement 26 qui est indépendante de la boucle de refroidissement du moteur, dite boucle à basse température (BT). Le troisième échangeur E3 fait partie d'une boucle de refroidissement 28 qui est elle aussi indépendante de la boucle de refroidissement du moteur, dite boucle à très basse température (TBT).

On se réfère maintenant à la figure 3 qui constitue un autre exemple de réalisation. Par rapport à la réalisation de la figure 2, la différence réside dans le fait que l'échangeur E3 est traversé ici par de l'air ambiant A prélevé à l'extérieur du véhicule. Ainsi, le fluide réfrigérant gazeux est d'abord refroidi en deux étages par échange de chaleur avec le liquide de refroidissement du moteur, et ensuite refroidi dans un troisième étage par échange de chaleur avec l'air ambiant.

Il est à noter que, dans une forme de réalisation plus simple (non représentée), le troisième échangeur de chaleur E3 n'est pas présent. Dans cette version simplifiée, le fluide réfrigérant est alors refroidi par deux échangeurs parcourus tous deux par le liquide de refroidissement du moteur.

Sur les figures 2 et 3, le fluide réfrigérant FR circule dans une canalisation 30 qui traverse successivement les échangeurs E1, E2 et E3 dans le sens indiqué par les flèches.

Les expressions "haute température", "basse température", et "très basse température" signifient que ces températures ont des valeurs (ou plutôt des plages) qui sont successivement décroissantes.

Pour fixer les idées, la haute température est habituellement comprise entre 80 et 100°C (typiquement 90°C), la basse température est comprise entre 50 et 70°C (typiquement 60°C), tandis que la très basse température peut être comprise entre 30 et 60°C (typiquement environ 50°C) dans le cas d'un refroidissement par le liquide de refroidissement et à une température dépendant de l'air ambiant, lorsque cet air ambiant est utilisé pour le refroidissement.

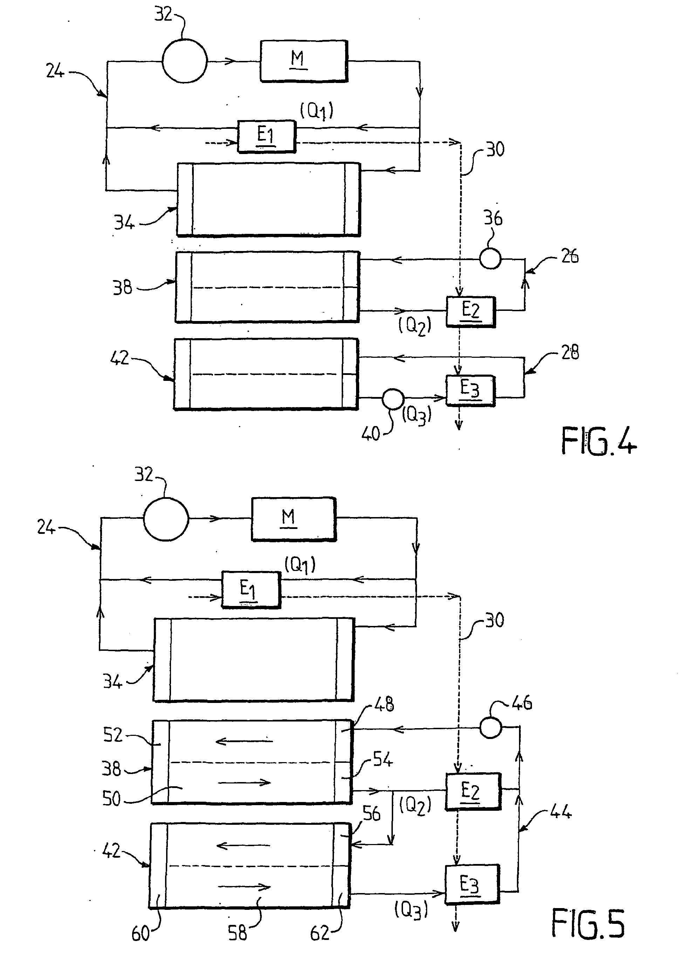

On se réfère maintenant à la figure 4 qui illustre de façon détaillée un circuit de refroidissement du type de celui de la figure 2. On retrouve ici la canalisation 30 parcourue par le fluide réfrigérant et qui traverse successivement les échangeurs E1, E2 et E3.

Le premier échangeur E1 fait partie de la boucle 24 qui refroidit le moteur M. Le liquide de refroidissement du moteur, typiquement de l'eau additionnée d'un antigel, est mis en mouvement par une pompe de circulation 32 et traverse aussi un radiateur 34 servant au refroidissement du moteur M.

Le deuxième échangeur E2 fait partie de la boucle de refroidissement 26 à basse température, qui est indépendante de la boucle 24 de refroidissement du moteur, mais qui est aussi parcourue par le liquide de refroidissement du moteur. La boucle 26 comporte sa propre pompe de circulation 36, ainsi qu'un radiateur de refroidissement 38 à basse température.

Le troisième échangeur E3 fait partie de la boucle de refroidissement 28 à très basse température, cette boucle étant indépendante de la boucle de refroidissement du moteur et également indépendante de la boucle 26. La boucle 28 comporte également sa propre pompe de circulation 40 et elle comporte un radiateur de refroidissement 42 fonctionnant à très basse température. Ainsi, dans la forme de réalisation de la figure 4, les trois radiateurs 34, 38 et 42 sont indépendants.

On se réfère maintenant à la figure 5 qui montre un circuit de refroidissement analogue à celui de la figure 4. La principale différence réside ici dans le fait que la boucle de refroidissement à basse température et la boucle de refroidissement à très basse température constituent une seule et même boucle 44 comportant une seule pompe de circulation 46, le radiateur de refroidissement 38 à basse température alimentant le radiateur de refroidissement 42 à très basse température.

Comme on peut le voir sur la figure 5, le liquide de refroidissement mis en mouvement par la pompe 46 pénètre dans un compartiment d'entrée 48 du radiateur 38, circule dans une première partie du faisceau 50 du radiateur pour gagner une boîte collectrice 52, puis circule dans une direction opposée dans le faisceau 50 pour gagner un compartiment de sortie 54. Le liquide de refroidissement issu du radiateur 38 quitte le compartiment 54 et est réparti ensuite entre l'échangeur E2 et un compartiment d'entrée 56 du radiateur 42 à très basse température. Le liquide de refroidissement traverse une partie du faisceau 58 du radiateur 42 pour gagner une boîte collectrice 60, circule ensuite en sens opposé dans une autre partie du faisceau 58 pour gagner un compartiment de sortie 62 et rejoindre ensuite l'échangeur E3.

Sur les figures 4 et 5, on a désigné par Q1, Q2 et Q3 les débits respectifs du liquide de refroidissement à l'entrées des trois échangeurs E1, E2 et E3. Il est avantageux que le débit Q3 du liquide de refroidissement entrant dans le troisième échangeur E3 soit inférieur au débit Q2 du liquide de refroidissement entrant dans le deuxième échangeur E2. En outre le débit Q2 peut être inférieur au débit Q1 du liquide de refroidissement entrant dans le premier échangeur E1.

Dans les modes de réalisation des figures 4 et 5, le radiateur de refroidissement 38 à basse température, le radiateur de refroidissement 42 à très basse température et le radiateur de refroidissement 34 à haute température servant au refroidissement du moteur peuvent constituer un seul et même composant.

Dans une autre variante, le radiateur de refroidissement 38 à basse température et le radiateur de refroidissement 42 à très basse température peuvent constituer un seul composant, le radiateur de refroidissement 34 à haute température, qui sert au refroidissement du moteur, étant alors séparé de ce composant.

Par ailleurs, il est avantageux de réaliser les trois échangeurs E1, E2 et E3 sous la forme d'un seul composant.

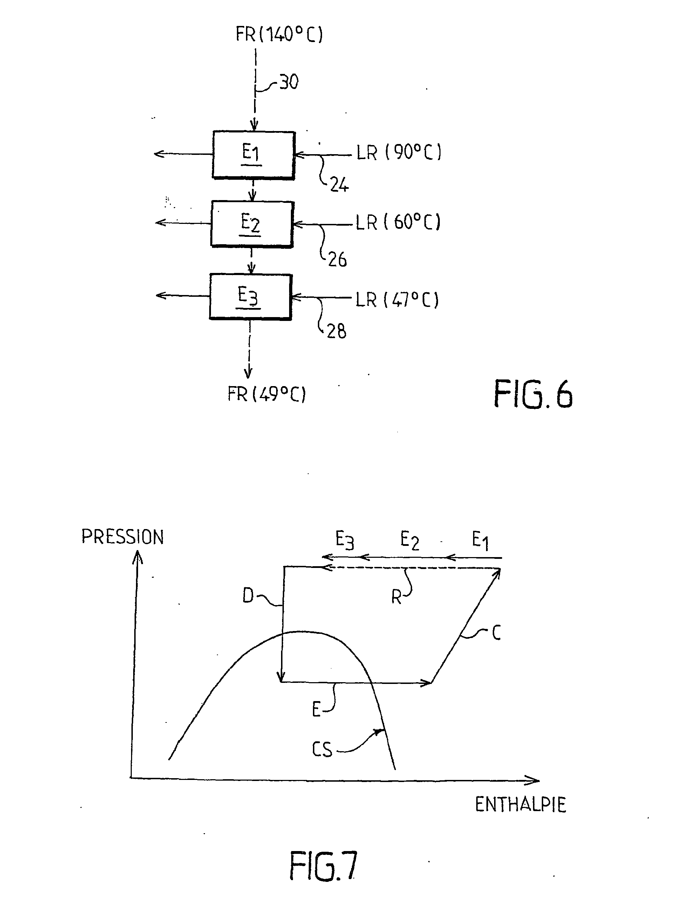

On se réfère maintenant à la figure 6 qui s'apparente au schéma de la figure 2. On a indiqué en plus sur ce schéma, à titre indicatif, des valeurs de température à la fois pour le fluide réfrigérant et pour le liquide de refroidissement. Le fluide réfrigérant FR (ici du dioxyde de carbone) se trouve à une température de 140°C à l'entrée de l'échangeur E1 et à une température de 49°C à la sortie de l'échangeur E3. Le liquide de refroidissement du moteur se trouve respectivement à des températures de 90°C, 60°C et 47°C à l'entrée des échangeurs E1, E2 et E3. Bien entendu, ces valeurs de température sont indiquées seulement à titre d'exemple.

Dans le cas particulier du refroidissement du dioxyde de carbone par un refroidisseur à trois étages d'échange de chaleur, les fonctions respectives de ces trois étages peuvent être précisées comme suit. Dans le premier étage, le dioxyde de carbone qui arrive à une température de l'ordre de 150°C est refroidi par le liquide de refroidissement qui se trouve à une température de l'ordre de 50°C. Le deuxième étage sert à évacuer de la puissance thermique, tandis que le troisième étage abaisse la température du dioxyde de carbone.

On se réfère maintenant à la figure 7 qui montre un diagramme d'état avec l'enthalpie en abscisse et la pression en ordonné.

Sur ce graphique est représenté le diagramme d'état du fluide réfrigérant pour les différentes phases de fonctionnement :

### Compression C, refroidissement R, détente D et évaporation E.

On a représenté schématiquement pour le refroidissement les trois étages successifs correspondant respectivement aux trois échangeurs E1, E2 et E3. On s'aperçoit que ce diagramme d'état a la forme générale d'un trapèze pour lequel les phases de refroidissement et d'évaporation sont à pression constante.

On s'aperçoit que ce diagramme d'état coupe la courbe de saturation, (désignée par la référence CS) du fluide réfrigérant.

L'invention trouve une application générale aux circuits de climatisation pour véhicules automobiles. Le fluide réfrigérant gazeux est avantageusement un fluide du type dioxyde de carbone, tandis que le liquide de refroidissement est avantageusement de l'eau additionnée d'un antigel, par exemple d'un glycol.

L'invention n'est pas limitée aux formes de réalisation décrites précédemment à titre d'exemples. En particulier, comme déjà indiqué, le troisième échangeur E3 peut être omis.

## Revendications

1. Dispositif d'échange de chaleur pour un circuit de climatisation de véhicule automobile, parcouru par un fluide réfrigérant, le véhicule comportant un moteur refroidi par un liquide de refroidissement circulant dans une boucle de refroidissement, le dispositif
comprenant au moins deux échangeurs de chaleur, à savoir un premier échangeur (E1) fonctionnant à haute température et un deuxième échangeur (E2) fonctionnant à basse température, tous deux parcourus par le liquide de refroidissement du moteur du véhicule, et formant deux étages de refroidissement, en sorte que le fluide réfrigérant gazeux est successivement refroidi par le premier échangeur (E1) et par le deuxième échangeur (E2), le deuxième échangeur (E2) faisant partie d'une boucle de refroidissement (26) à basse température, qui est indépendante de la boucle de refroidissement (24) du moteur, et qui comporte sa propre pompe de circulation (36), ainsi qu'un radiateur de refroidissement (38) à basse température.

2. Dispositif d'échange de chaleur selon la revendication 1, **caractérisé en ce que** le premier échangeur (E1) fait partie de la boucle de refroidissement (24) du moteur (M), qui constitue une boucle à haute température (HT) et qui inclut le radiateur de refroidissement (34) du moteur.

3. Dispositif d'échange de chaleur selon l'une des revendications 1 à 2, **caractérisé en ce qu'**il comprend au moins un troisième échangeur (E3) fonctionnant à très basse température, formant un troisième étage de refroidissement, en sorte que le fluide réfrigérant gazeux est successivement refroidi par le premier échangeur (E1), par le deuxième échangeur (E2) et par le troisième échangeur (E3).

4. Dispositif d'échange de chaleur selon la revendication 3, **caractérisé en ce que** le troisième échangeur (E3) fait partie d'une boucle de refroidissement (28) à très basse température, qui est indépendante de la boucle de refroidissement (24) du moteur, mais qui est aussi parcourue par le liquide de refroidissement du moteur, et qui comporte un radiateur de refroidissement (42) à très basse température.

5. Dispositif d'échange de chaleur selon la revendication 4, **caractérisé en ce que** la boucle de refroidissement (26) à basse température et la boucle de refroidissement (28) à très basse température constituent deux boucles indépendantes comportant chacune leurs propres pompes de circulation (36, 40), le radiateur de refroidissement (38) à basse température et le radiateur de refroidissement (42) à très basse température étant indépendants.

6. Dispositif d'échange de chaleur selon la revendication 4, **caractérisé en ce que** la boucle de refroidissement à basse température et la boucle de refroidissement à très basse température constituent une seule boucle (44), comportant une seule pompe de circulation (46), le radiateur de refroidissement (38) à basse température alimentant le radiateur de refroidissement (42) à très basse température.

7. Dispositif d'échange de chaleur selon l'une des revendications 5 et 6, **caractérisé en ce que** le radiateur de refroidissement (38) à basse température, le radiateur de refroidissement (42) à très basse température et le radiateur de refroidissement (34) à haute température, servant au refroidissement du moteur, constituent un seul composant.

8. Dispositif d'échange de chaleur selon l'une des revendications 5 et 6, **caractérisé en ce que** le radiateur de refroidissement (38) à basse température et le radiateur de refroidissement (42) à très basse température constituent un seul composant, tandis que le radiateur de refroidissement (34) à haute température, servant au refroidissement du moteur, est séparé de ce composant.

9. Dispositif d'échange de chaleur selon l'une des revendications 4 à 8, **caractérisé en ce que** le débit (Q3) du liquide de refroidissement entrant dans le troisième échangeur (E3), est inférieur au débit (Q2) du liquide de refroidissement entrant dans le deuxième échangeur (E2).

10. Dispositif d'échange de chaleur selon la revendication 4 3, **caractérisé en ce que** le troisième échangeur (E3) est traversé par de l'air ambiant.

11. Dispositif d'échange de chaleur selon l'une des revendications 3 à 10, **caractérisé en ce que** le premier échangeur (E1), le deuxième échangeur (E2) et le troisième échangeur (E3) forment un seul composant.

12. Dispositif d'échange de chaleur selon l'une des revendications 1 à 11, **caractérisé en ce que** le fluide réfrigérant est du dioxyde de carbone.

13. Dispositif d'échange de chaleur selon l'une des revendications 1 à 12, **caractérisé en ce que** le liquide de refroidissement du moteur est de l'eau additionnée d'un antigel.

## Claims

1. Heat exchange device for a motor vehicle air-conditioning circuit through which there passes a coolant fluid, the vehicle comprising an engine cooled by a liquid coolant circulating in a cooling loop, the device comprising at least two heat exchangers, namely a first exchanger (E1) operating at high temperature and a second exchanger (E2) operating at low temperature, the vehicle engine liquid coolant passing through both of these, which form two cooling stages so that the gaseous coolant fluid is successively cooled by the first exchanger (E1) and by the second exchanger (E2), the second exchanger (E2) forming part of a low-temperature cooling loop (26) which is independent of the engine cooling loop (24) and comprises its own circulation pump (36) and a low-temperature cooler (38).

2. Heat exchange device according to Claim 1, **characterized in that** the first exchanger (E1) forms part of the engine (M) cooling loop (24) which constitutes a high-temperature (HT) loop and which includes the engine cooler (34).

3. Heat exchange device according to either of Claims 1 and 2, **characterized in that** it comprises at least one third exchanger (E3) operating at very low temperature, forming a third cooling stage so that the gaseous coolant fluid is successively cooled by the first exchanger (E1), by the second exchanger (E2) and by the third exchanger (E3).

4. Heat exchange device according to Claim 3, **characterized in that** the third exchanger (E3) forms part of a very-low-temperature cooling loop (28) which is independent of the engine cooling loop (24) but which also has the engine liquid coolant passing through it and comprises a very-low-temperature cooler (42).

5. Heat exchange device according to Claim 4, **characterized in that** the low-temperature cooling loop (26) and the very-low-temperature cooling loop (28) constitute two independent loops each comprising their own circulation pumps (36, 40), the low-temperature cooler (38) and the very-low-temperature cooler (42) being independent.

6. Heat exchange device according to Claim 4, **characterized in that** the low-temperature cooling loop and the very-low-temperature cooling loop constitute a single loop (44) comprising a single circulation pump (46), the low-temperature cooler (38) feeding into the very-low-temperature cooler (42).

7. Heat exchange device according to either of Claims 5 and 6, **characterized in that** the low-temperature cooler (38), the very-low-temperature cooler (42) and the high-temperature cooler (34) used for cooling the engine constitute a single component.

8. Heat exchange device according to either of Claims 5 and 6, **characterized in that** the low-temperature cooler (38) and the very-low-temperature cooler (42) constitute a single component whereas the high-temperature cooler (34) used for cooling the engine is separate from this component.

9. Heat exchange device according to one of Claims 4 to 8, **characterized in that** the flow (Q3) of liquid coolant entering the third exchanger (E3) is lower than the flow (Q2) of liquid coolant entering the second exchanger (E2).

10. Heat exchange device according to Claim 3, **characterized in that** the third exchanger (E3) has ambient air passing through it.

11. Heat exchange device according to one of Claims 3 to 10, **characterized in that** the first exchanger (E1), the second exchanger (E2) and the third exchanger (E3) form a single component.

12. Heat exchange device according to one of Claims 1 to 11, **characterized in that** the coolant fluid is carbon dioxide.

13. Heat exchange device according to one of Claims 1 to 12, **characterized in that** the engine liquid coolant is water to which an antifreeze has been added.

## Patentansprüche

1. Wärmetauschervorrichtung für einen Kraftfahrzeug-Klimatisierungskreis, der von einem Kühlfluid durchströmt wird, wobei das Kraftfahrzeug einen Motor aufweist, der durch eine Kühlflüssigkeit gekühlt wird, die in einer Kühlschleife zirkuliert, wobei die Vorrichtung
wenigstens zwei Wärmetauscher enthält, nämlich einen ersten Tauscher (E1), der bei hoher Temperatur arbeitet, und einen zweiten Tauscher (E2), der bei niedriger Temperatur arbeitet, die beide von der Kühlflüssigkeit des Kraftfahrzeugs durchströmt werden und zwei Kühlstufen bilden, derart, dass das gasförmige Kühlfluid nacheinander durch den ersten Tauscher (E1) und durch den zweiten Tauscher (E2) gekühlt wird, wobei der zweite Tauscher (E2) einen Teil einer Kühlschleife (26) mit niedriger Temperatur bildet, die von der Kühlschleife (24) des Motors unabhängig ist und ihre eigene Zirkulationspumpe (36) sowie einen eigenen Kühlkörper (38) mit niedriger Temperatur enthält.

2. Wärmetauschervorrichtung nach Anspruch 1, **dadurch gekennzeichnet, dass** der erste Tauscher (E1) einen Teil der Kühlschleife (24) des Motors (M) bildet, die eine Schleife (HT) mit hoher Temperatur bildet und den Kühlkörper (34) des Motors enthält.

3. Wärmetauschervorrichtung nach einem der Ansprüche 1 bis 2, **dadurch gekennzeichnet, dass** sie wenigstens einen dritten Tauscher (E3) enthält, der bei sehr niedriger Temperatur arbeitet und eine dritte Kühlstufe bildet, derart, dass das gasförmige Kühlfluid nacheinander durch den ersten Tauscher (E1), durch den zweiten Tauscher (E2) und durch den dritten Tauscher (E3) gekühlt wird.

4. Wärmetauschervorrichtung nach Anspruch 3, **dadurch gekennzeichnet, dass** der dritte Tauscher (E3) einen Teil einer Kühlschleife (28) mit sehr niedriger Temperatur bildet, die von der Kühlschleife (24) des Motors unabhängig ist, jedoch ebenfalls von der Kühlflüssigkeit des Motors durchströmt wird und einen Kühlkörper (42) mit sehr niedriger Temperatur enthält.

5. Wärmetauschervorrichtung nach Anspruch 4, **dadurch gekennzeichnet, dass** die Kühlschleife (26) mit niedriger Temperatur und die Kühlschleife (28) mit sehr niedriger Temperatur zwei unabhängige Schleifen bilden, die jeweils ihre eigenen Zirkulationspumpen (36, 40) aufweisen, wobei der Kühlkörper (38) mit niedriger Temperatur und der Kühlkörper (42) mit sehr niedriger Temperatur unabhängig sind.

6. Wärmetauschervorrichtung nach Anspruch 4, **dadurch gekennzeichnet, dass** die Kühlschleife mit niedriger Temperatur und die Kühlschleife mit sehr niedriger Temperatur eine einzige Schleife (44) bilden, die eine einzige Zirkulationspumpe (46) enthält, wobei der Kühlkörper (38) mit niedriger Temperatur den Kühlkörper (42) mit sehr niedriger Temperatur versorgt.

7. Wärmetauschervorrichtung nach einem der Ansprüche 5 und 6, **dadurch gekennzeichnet, dass** der Kühlkörper (38) mit niedriger Temperatur, der Kühlkörper (42) mit sehr niedriger Temperatur und der Kühlkörper (34) mit hoher Temperatur, der der Kühlung des Motors dient, ein einziges Bauteil bilden.

8. Wärmetauschervorrichtung nach einem der Ansprüche 5 und 6, **dadurch gekennzeichnet, dass** der Kühlkörper (38) mit niedriger Temperatur und der Kühlkörper (42) mit sehr niedriger Temperatur ein einziges Bauteil bilden, während der Kühlkörper (34) mit hoher Temperatur, der der Kühlung des Motors dient, von diesem Bauteil getrennt ist.

9. Wärmetauschervorrichtung nach einem der Ansprüche 4 bis 8, **dadurch gekennzeichnet, dass** der Durchfluss (Q3) der Kühlflüssigkeit, der in den dritten Tauscher (E3) eintritt, kleiner ist als der Durchfluss (Q2), der in den zweiten Tauscher (E2) eintritt.

10. Wärmetauschervorrichtung nach Anspruch 3, **dadurch gekennzeichnet, dass** der dritte Tauscher (E3) von Umgebungsluft durchquert wird.

11. Wärmetauschervorrichtung nach einem der Ansprüche 3 bis 10, **dadurch gekennzeichnet, dass** der erste Tauscher (E1), der zweite Tauscher (E2) und der dritte Tauscher (E3) ein einziges Bauteil bilden.

12. Wärmetauschervorrichtung nach einem der Ansprüche 1 bis 11, **dadurch gekennzeichnet, dass** das Kühlfluid Kohlenstoffdioxid ist.

13. Wärmetauschervorrichtung nach einem der Ansprüche 1 bis 12, **dadurch gekennzeichnet, dass** das Kühlfluid des Motors Wasser ist, dem ein Gefrierschutzmittel hinzugefügt ist.
